# EUROPEAN PATENT APPLICATION

(11) **EP 2 796 889 A1**
(43) Date of publication of application: **29.10.2014**
(21) Application number: 13275097.7
(22) Date of filing: 25.04.2013
(51) Int. Cl.: G01S 7/292, G01S 7/34

(54) **Improvements in and relating to sensitivity time control for radars**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed is a method of providing selective attenuation in a Radar receiver, comprising the steps of: receiving a plurality of returns; identifying in a first scan, a return of a magnitude exceeding a predetermined threshold; applying in a subsequent scan, a predetermined desensitisation profile to said return. Also disclosed is a Radar receiver arranged to perform the method.

## Description

### Field

The present invention is concerned with Sensitivity Time Control (STC), which is used in Radar systems to attenuate the very strong returns received from nearby targets, often clutter, which would otherwise drive the receiver into saturation.

### Background to the Present Invention

Returns from any object tend to follow a 1/R⁴ relationship. This arises because the power reaching the target decays at 1/R² on the way to the target and then decays at the same rate (1/R²) on the way back to the Radar. The requirement to detect targets over extended range intervals, covering both near and far, places onerous design requirements on the Radar receiver. The receiver must operate over a very wide dynamic range in order to gave the ability to detect both large and small targets at both near and far ranges. A relatively high transmit power is required to illuminate distant and/or small targets, but the power of the signal which is received can be very low indeed.

Objects near to a Radar will return stronger signals than objects which are positioned further away. To illustrate this, consider a Radar on board a ship in open water. If the ship passes close to a large oil tanker, for instance, the signal returned from the oil tanker would be far larger than a signal returned from an aircraft many kilometres away.

This poses a problem in that the receiver can be driven into saturation by the large return from the nearby object, simply because it must be very sensitive in order to successfully receive a return from a remote object. In prior art systems, it is possible to desensitise the receiver as a function of range, but across its entire azimuthal range so that it is not overloaded by the return from the nearby object. However, this has the unwanted effect of adversely affecting its ability to receive weaker signals and poses a real risk that targets of interest may be missed as a result of desensitising the Radar receiver.

A typical prior art STC technique is to desensitise the receiver according to a 1/R⁴ (where R = range or distance) law, so that immediately after a transmit pulse, when the Radar is in receive mode, a very large degree of attenuation is applied to the receive signal, with the attenuation, or desensitisation, set to reduce at a rate of 1/R⁴, which has the effect that returns from nearby objects are heavily attenuated and returns from further afield are attenuated to a much lesser extent. In a perfect prior art Radar receiver, having STC with a 1/R⁴ rule, the strength of return signal from a given target would be identical, regardless of its range from the Radar.

STC is necessary to ensure that the Radar is able to operate properly over a desired range, but prior art STC methods tend to be rather crude and apply one rule to all scenarios, which can unnecessarily degrade receiver performance, making it difficult to detect very small targets where desensitisation is being applied.

The situation is further exacerbated with the ability of Radar systems to operate range ambiguously, which means processing targets over many range ambiguities. A range ambiguity is the maximum range that a transmitted pulse can travel and return before the next pulse is transmitted. In Radar systems employing bursts of many pulses, returns are received, in the same interval, from different transmitted pulses from different range ambiguities. As discussed previously, it is clear that distant targets, which yield very low received power at the Radar receiver, may be received at the same time as close targets or clutter, which present much higher and possibly saturating receiver power.

The application of desensitisation has an adverse effect on the ability to detect small targets at close range or, in the ambiguous case, larger targets at distant ranges. It is, therefore, preferable to avoid applying desensitisation to the receiver unless absolutely necessary, with the necessity arising due to the presence of saturating sources such as large vessels and/or land clutter at close range.

Embodiments of the present invention seek to address shortcomings in prior art STC systems, whether mentioned herein or nor.

### SUMMARY OF THE INVENTION

According to a first aspect of the present invention, there is provided a method of providing selective attenuation in a Radar receiver, comprising the steps of: receiving a plurality of returns; identifying in a first scan, a return of a magnitude exceeding a predetermined threshold; applying in a subsequent scan, a predetermined desensitisation profile to said return.

Preferably, the method further comprises the step of applying an inverse of said desensitisation profile and performing a pulse compression process.

Preferably, the desensitisation profile is one or more of: a defined attenuation figure for a particular range and azimuth combination; and a 1/Rⁿ attenuation profile.

Preferably, more than one desensitisation profile is applied per complete sweep.

Preferably, the desensitisation profile is selected according to the steps: applying a predefined maximum level of attenuation on a first sweep; determining an unattenuated signal level from the attenuated signal level and the predefined maximum level of attenuation; applying, on a subsequent sweep, sufficient attenuation to prevent the receiver from saturating.

According to a second aspect of the present invention, there is provided a tangible, non-transient computer-readable storage medium having instructions which, when executed, cause a computer device to perform the method of the first aspect.

According to a third aspect of the present invention, there is provided a Radar receiver operable to selectively attenuate a received signal, comprising: an attenuator arranged to selectively attenuate an input signal derived from an antenna; a receiver; a signal reconstructor, arranged to receive signals from the receiver and which is operable to boost the received signals by an amount equal to the level of attenuation provide by the attenuator; a sweep analyser, operable to identify a received signal which would place the receiver into saturation, were attenuation not applied by the attenuator; and an attenuation controller, operable to receive information from the sweep analysed on a received signal which would place the receiver into saturation and to control the attenuator to provide a desired level of attenuation.

### BRIEF DESCRIPTION OF THE FIGURES

For a better understanding of the invention, and to show how embodiments of the same may be carried into effect, reference will now be made, by way of example, to the accompanying diagrammatic drawings in which:
Figure 1 shows a representation of a vessel in the vicinity of two nearby objects;
Figure 2 shows a power map, used to analyse received signals from different azimuth/range pairs;
Figure 3 shows a flowchart showing certain steps according to an embodiment of the present invention; and
Figure 4 shows an apparatus according to an embodiment of the invention;

### DETAILED DESCRIPTION OF PREFERRED EMBODIMENT

Embodiments of the invention seek to selectively desensitise the Radar receiver by applying different degrees of desensitisation (or attenuation) for different parts of the sweep. The different parts of the sweep may be different azimuthal sectors, different ranges (distance) or both.

In Radars fitted to ocean-going vessels, the problem of nearby clutter is not normally so great once the vessel is out in open water. The problem tends to be most pronounced in the littoral zone i.e. near the coast, where there are likely to be more objects nearby which can return a relatively strong signal.

However, in open water, a vessel may be travelling with one or more other vessels, for instance, and the return received from said one or more other vessels would be far greater than wanted returns from possible threats further afield. If the STC were adjusted for the entire azimuthal sweep (i.e. 360°), then the resulting desensitisation of the Radar receiver could result in wanted signals being attenuated to a level where they could not be detected. This could prove dangerous, in some circumstances.

Embodiments of the present invention are able to deal with different types of clutter targets, at different azimuths and/or ranges, simultaneously.

The above scenario is just one example of a situation where a greater degree of control over the STC process is desirable. Embodiments of the present invention provide a means whereby the degree of STC which is applied is controllable, so that the Radar receiver may be adaptively desensitised according to a determination based on information perceived from the environment in which the Radar is located.

Examples given in this description focus on a marine Radar installation, which necessarily changes its position over time, but other forms of Radar, both static and mobile, can also benefit from embodiments of the invention. Examples of such Radars include land based, aircraft-based or land-vehicle based Radars.

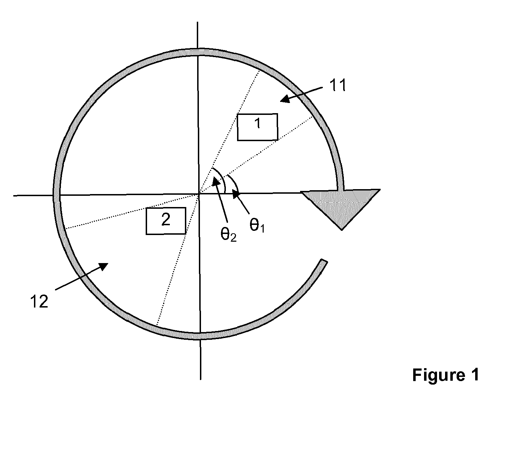

Figure 1 shows a representation of a vessel at sea, with two large objects - accompanying vessels - in the vicinity of the vessel. The vessel in question is located at the origin of the axes and the two vessels 1, 2 are located nearby. The large nearly circular arrow represents the azimuthal sweep of the Radar.

Embodiments of the present invention are able to selectively provide different amounts of desensitisation to the Radar receiver in response to detecting the nearby large objects 1, 2 which would otherwise drive the Radar receiver into saturation.

The two sectors 11 and 12 correspond to portions of the azimuthal sweep, including objects 1 and 2 respectively, where a different degree of STC is applied, compared to the remainder of the azimuthal sweep i.e. all the portions except sectors 11 and 12. The attenuation applied to signals received from sectors 11 and 12 is increased, compared to that applied to the remainder of the sweep. This ensures that returns which are associated with the nearby objects are attenuated significantly and that other regions of the sweep can benefit from different, enhanced, levels of receiver sensitivity such that there is a far better chance of detecting targets therein.

There are two specific forms of adaptation, in particular, envisaged according to embodiments of the invention. The first is concerned with point sources of clutter, such as other vessels, which has been described briefly already. The second is concerned with more dispersed clutter sources, disposed in a particular region or sector of the sweep.

In order to assess the magnitude of returns received, the received signals are examined in the uncompressed domain i.e. before any pulse compression operation is performed on the received signals. On the first sweep, any returns which are likely to place the receiver into saturation are identified and, in the next sweep, an appropriate level of desensitisation is applied, but only to adapt to the particular returns identified which would otherwise cause receiver saturation.

In effect, if a signal is received in a first sweep, which would cause the receiver to saturate, a predetermined amount of attenuation is applied selectively to that signal on the subsequent sweep. The level of the now attenuated signal is such that the minimum level of attenuation is applied to prevent the receiver from saturating.

This is achieved, in practice, by applying a predetermined maximum level of attenuation on the first sweep, such that no sources can saturate the receiver. The unattenuated signal level is then calculated from the received signal level plus the level of attenuation applied, and then compared against the saturation level of the receiver.

This is an iterative process which is repeated in all subsequent sweeps, meaning that an STC profile is created, based on the history of previous sweeps, but with a bias towards the return immediately preceding the current sweep. In other words, on a first sweep, a record is made of all the returns received from pulses transmitted in that sweep. The record is in the form of a map which shows received signals against azimuth and range. In this way, if there is a large nearby object at a certain distance, and located, for example, between 20 and 25°, which would place the receiver into saturation, on the next sweep, a minimum level of attenuation is provided which will just prevent saturation and desensitises the receiver, but only for the distance (range) and azimuth extent where this is required.

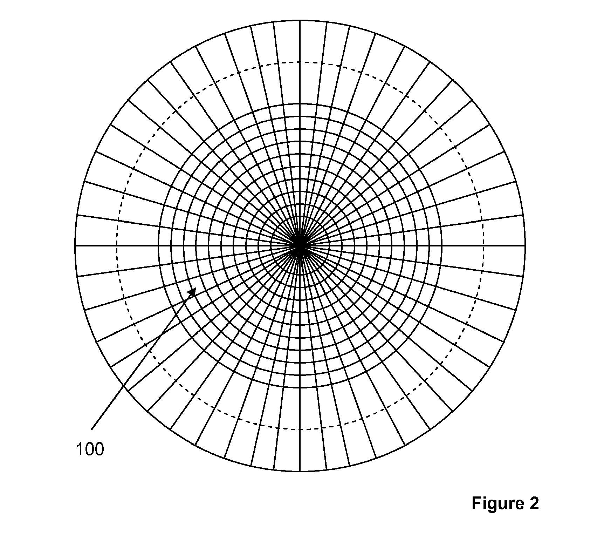

Figure 2 shows a power map which may be used in storing measured receiver power from targets/clutter in range and azimuth. The Radar is located at the origin, surrounded a by a series of concentric circles. Each concentric circle corresponds to a given range and the increments are determined by the range resolution of the Radar system. Each spoke radiating from the origin represents an amount of azimuth resolution. The actual resolution of a particular Radar system will determine the steps between adjacent spokes or ranges.

An azimuth and range pair (i.e. distance and azimuth, relative to the Radar) defines a location of a possible target. Of course, a target may spread over more than one pair of co-ordinates, depending on its size and the range/azimuth resolution of the Radar. A nearby vessel will most likely occupy more azimuth locations in the power map than a vessel further away, and is likely to be represented with a larger power value.

After the attenuation has been applied to the received signal to prevent saturation, it is necessary to apply the inverse of the applied attenuation to the received signal before the pulse compression process. This ensures that pulse compression can occur properly and that the desensitisation which has been applied to avoid saturation is effectively removed before receive signal processing takes place, and so that the maximum level of receiver sensitivity is maintained across all returns. The pulse compression process does not cope well with sharp step changes and so the 'true' amplitude of the received signals, i.e. those that would have been received had the receiver not been saturated, should be used for this and later processing stages.

In the case of a point source of clutter (e.g. a nearby vessel), then a specific attenuation may be applied for a particular sector of the sweep, i.e. from a first angle θ₁ to θ₂ and for a particular range or distance. This is shown in Figure 1, in connection with attenuating the return from vessel 1. This requires attenuating the return signal only in one of more distinct range cells. This has the effect of 'muting' or diminishing the amplitude of the return from a particular source, without affecting the receiver sensitivity for any other regions or sectors of the sweep.

In the case of more dispersed clutter i.e. not connected with a point source, a different approach is needed. This applies a 1/Rⁿ attenuation profile to the received signals, with R representing the range and n being in the range 0 to 5, typically). Rate of tail off of the attenuation with increasing range can be tuned by use of different values of n. This approach has some similarity to prior art techniques, which are known to provide such an attenuation profile, but which, in the prior art, are applied for the entire azimuthal sweep. Embodiments of the present invention, however, select a particular profile, based on data derived from the current conditions.

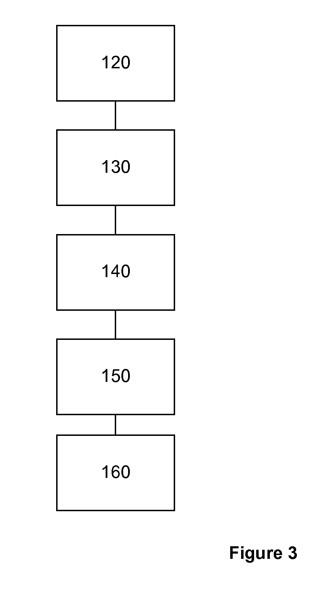

Figure 3 shows a flowchart which sets out the operation of a method according to an embodiment of the invention. At step 120, returns are received in response to transmissions from the Radar. At step 130, the returns are analysed and any that exceed a predefined threshold, equivalent to placing the receiver into saturation are identified.

At step 140, a desensitisation profile is applied to the returns identified in step 130, in order to bring these returns within the receiver's operational range. At this point, the attenuated signals are all within the receiver's dynamic range, but do not accurately represent the magnitude of the signals in reality. In order to do this, at step 150, an inverse of the desensitisation profile is applied to the signals which have been previously attenuated so that the signals are now representative of the true magnitude of the received signals.

At step 160, further processing of the signals is performed, including pulse compression and analysis to identify possible targets.

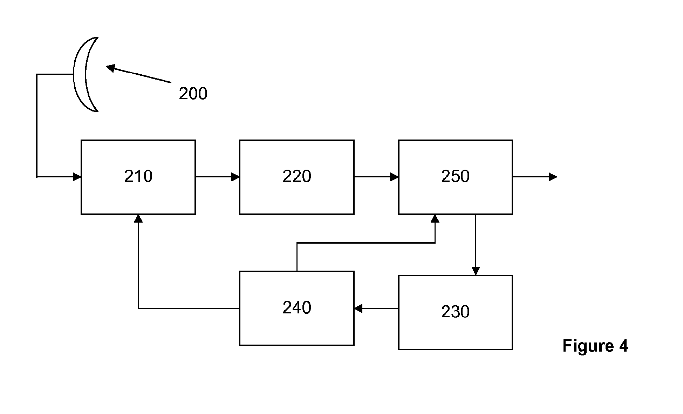

Figure 4 shows apparatus according to an embodiment of the invention. It focuses on just certain parts of the receive chain. Of course, as the skilled person will realise, there are further components connected with the transmit chain, which are not shown here for the sake of clarity and conciseness.

Radar signals are transmitted and received by the Radar antenna 200. Receive signals pass from the antenna to a selective attenuator 210, which is controlled by attenuation controller 240, as will be described shortly. From the selective attenuator 210, the receive signals pass to the receiver 220. From the receiver, the signals pass to the signal reconstructor 250.

The attenuated signal from receiver 220 is passed to signal reconstructor 250 which is operable to boost the attenuated signals by an amount equal to the amount of attenuation which has been applied. This information is supplied by the attenuation controller 240. In this way, the signal leaving the signal reconstructor 250 is as it would have been if the receiver had the dynamic range to receive a large signal which was otherwise outside its operable range.

Reconstructed signals from the signal reconstructor 250 are then passed to the sweep analyser 230. The sweep analyser examines the signals and identifies any that would have placed the receiver into saturation, had attenuation not been applied. It does this by searching for reconstructed signals which are above a threshold, the threshold being based on the a priori expectation of saturation level minus an offset, with the offset being selected to provide a margin such that the receiver does not get too close to saturation.

Data from the sweep analyser 230 passes to the attenuation controller 240, which is operable to control the attenuation of the selective attenuator 210 so that predetermined attenuation levels are applied to the signal received from the antenna 200 before said signals are passed to the receiver. The attenuation is selective in the sense that it is only applied as needed, so that only those signals identified which are problematic are attenuated, rather than those which are within the receiver's normal operating range.

The attenuation can be of the form where a particular one or more range/azimuth pairs are attenuated by a fixed or predetermined amount to deal with point clutter. Alternatively, a 1/Rⁿ type of attenuation can be applied where a particular sector has more dispersed clutter, all of which requires a more generalised attenuation.

In any event, the sweep analyser operates on the current plus previous sweeps and passes data to the attenuation controller so that selective attenuation of either form can be applied on the subsequent sweep. In this way, the attenuation which is applied to particular clutter returns is derived from a combination of the most recently available data with a bias towards the sweep preceding the sweep where the selective attenuation is applied.

The sweep analyser 230, the attenuation controller 240 and signal reconstructor 250 are shown in Figure 4 as separate components. However, they may be integrated into a single unit. More particularly, they may be implemented in software and form customised code modules in a more general processing system.

The signal reconstructor 250 outputs the received returns to further receiver processing stages, such as pulse compression and subsequent analysis. These are unchanged from prior art implementations and so are not described further herein.

As can be seen, embodiments of the present invention are able to mitigate problems associate with prior art STC systems, which tended to offer a single solution which was applied across all ranges and azimuth. Embodiments described herein are able to offer selective attenuations in different situations and so allow the radar receiver to operate in its optimal range for all returns.

At least some embodiments of the invention may be constructed, partially or wholly, using dedicated special-purpose hardware. Terms such as 'component', 'module' or 'unit' used herein may include, but are not limited to, a hardware device, such as a Field Programmable Gate Array (FPGA) or Application Specific Integrated Circuit (ASIC), which performs certain tasks. Alternatively, elements of the invention may be configured to reside on an addressable storage medium and be configured to execute on one or more processors. Thus, functional elements of the invention may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Further, although the example embodiments have been described with reference to the components, modules and units discussed below, such functional elements may be combined into fewer elements or separated into additional elements.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of providing selective attenuation in a Radar receiver, comprising the steps of:
receiving a plurality of returns;
identifying in a first scan, a return of a magnitude exceeding a predetermined threshold;
applying in a subsequent scan, a predetermined desensitisation profile to said return.

2. The method of claim 1 further comprising the step of applying an inverse of said desensitisation profile and performing a pulse compression process.

3. The method as claimed in claim 1 or claim 2 wherein the desensitisation profile is one or more of: a defined attenuation figure for a particular range and azimuth combination; and a 1/Rⁿ attenuation profile.

4. The method as claimed in any preceding claim wherein more than one desensitisation profile is applied per complete sweep.

5. The method as claimed in any preceding claim wherein the desensitisation profile is selected according to the steps:
applying a predefined maximum level of attenuation on a first sweep;
determining an unattenuated signal level from the attenuated signal level and the predefined maximum level of attenuation;
applying, on a subsequent sweep, sufficient attenuation to prevent the receiver from saturating.

6. A tangible, non-transient computer-readable storage medium having instructions which, when executed, cause a computer device to perform the method of claims 1 to 5.

7. A Radar receiver operable to selectively attenuate a received signal, comprising:
an attenuator arranged to selectively attenuate an input signal derived from an antenna;
a receiver;
a signal reconstructor, arranged to receive signals from the receiver and which is operable to boost the received signals by an amount equal to the level of attenuation provide by the attenuator;
a sweep analyser, operable to identify a received signal which would place the receiver into saturation, were attenuation not applied by the attenuator; and
an attenuation controller, operable to receive information from the sweep analysed on a received signal which would place the receiver into saturation and to control the attenuator to provide a desired level of attenuation.
